Europäisches Patentamt

European Patent Office

Office européen des brevets

(19)

(11) Publication number: **0 025 333**
**B1**

(12)  **EUROPEAN PATENT SPECIFICATION**

(45) Date of publication of patent specification: **18.04.84**

(21) Application number: **80303049.3**

(22) Date of filing: **02.09.80**

(51) Int. Cl.³: **H 02 K 11/00,** H 02 K 7/20,
A 47 J 43/08

(54) Motor speed control system and a food mixer incorporating such system.

(30) Priority: **11.09.79 GB 7931546**

(43) Date of publication of application:
**18.03.81 Bulletin 81/11**

(45) Publication of the grant of the patent:
**18.04.84 Bulletin 84/16**

(84) Designated Contracting States:
**AT BE CH DE FR IT LI LU NL SE**

(56) References cited:
**DE - A - 2 752 208
FR - A - 2 012 716
US - A - 2 644 062
US - A - 2 784 332
US - A - 3 225 232
US - A - 3 579 003**

(73) Proprietor: **THORN EMI Domestic Appliances
Limited
THORN EMI House Upper Saint Martin's Lane
London, WC2H 9ED (GB)**

(72) Inventor: **Collie, Arthur Alexander
"Kentra" Bacon Lane
Hayling Island Hampshire (GB)**

(74) Representative: **Marsh, Robin Geoffrey et al,
Thorn EMI Patents Limited The Quadrangle
Westmount Centre Uxbridge Road
Hayes Middlesex, UB4 0HB (GB)**

Courier Press, Leamington Spa, England.

## Motor speed control system and a food mixer incorporating such system

The present invention relates to a speed control system for an electric motor.

More particularly, the invention relates to the combination of:— an electric motor; and a speed control system therefor, the speed control system comprising a circuit board with a pick-up coil mounted thereon and at least one element driven for rotation by the motor to produce in the coil an output signal dependent on the motor speed, the circuit board having circuitry responsive to the output of the coil for controlling the speed of the motor.

Such a combination is, of course, well known. In various applications where electric motors are used such as, for example, in food mixers, it is necessary or desirable to be able to adjust the speed of the motor. Where the load on the motor is variable, it is frequently desirable to have closed loop control of the motor speed rather than a simple open loop arrangement. One of the difficulties which arises with open or closed loop controls is the method of adjusting the demanded speed. Specifically, the difficulty which arises is in interfacing a user operable element such as a control knob with the motor speed control circuitry. Previously this has been done by means of devices such as potentiometers or multiposition switches, as in US Patent No. 3 225 232, wherein the speed may be set by making contact at one of three positions along a resistor chain, but both these have the disadvantage that they involve movable electrical contacts which are subject to wear, dirt accumulation and the production of electrical noise.

Various other motor speed control systems, incorporating a rotor and stator arrangement, are also known. These control systems, such as that disclosed in US Patent No. 2 784 332, generally operate by varying, either manually or automatically, the distance between the rotor and the stator, which thus provides variation in the motor speed.

The present invention seeks to provide an improved arrangement to those that have been provided heretofore for adjusting the set speed of the motor.

According to the present invention there is provided in combination, an electric motor and a speed control system therefor including components which respond to rotation of the electric motor to generate a control signal usable to control the speed of the electric motor the speed control system also including a circuit board with a pickup coil mounted thereon and at least one magnet connected to said motor and driven for rotation to produce, in the coil an output signal having a magnitude dependent, *inter alia*, on the motor speed, characterised in that the circuit board together with the pickup coil and a control circuit also mounted thereon, is arranged to be pivotally movable relative to the rotational path of said at least one magnet, the control circuit being responsive to the output signal of the coil and including a capacitor for generating said control signal to control the speed of said motor, charging means connectable to a current source for charging said capacitor, and discharge means responsive to said output signal of the coil for discharging the capacitor at a rate dependent upon the magnitude of said output signal, said magnitude being dependent upon the speed of rotation of the motor, and thus of said at least one magnet, and the relative distance between the circuit board and the rotational path of said at least one magnet, the combination further including manually-adjustable means comprising a user-operable mechanical control element for varying the spacing of the circuit board relative to the rotational path of said at least one magnet, thereby to control the speed of the motor by varying the pivotal state of the circuit board, said control signal being used to vary the power supply to the motor to control the speed thereof, so that the motor speed is dependent on the net discharge rate of said capacitor.

The invention further provides a domestic food mixer incorporating the combination of an electric motor and a speed control system according to the present invention.

The invention will be further described with reference to the accompanying drawings in which:—

Figure 1 is a scrap longitudinal section through one embodiment of combination motor/speed control system embodying the present invention;

Figure 2 is a view of the circuit board of the embodiment of Figure 1;

Figure 3 is a section on AA in Figure 2; and

FIGURE 4 is a circuit diagram of the embodiment.

In the following, the invention will be described with reference to the speed control of the drive motor of a Kenwood (Trade Mark) A 701 food mixer made by the applicant company; the general construction of the mixer is well known and description thereof would therefore be superfluous.

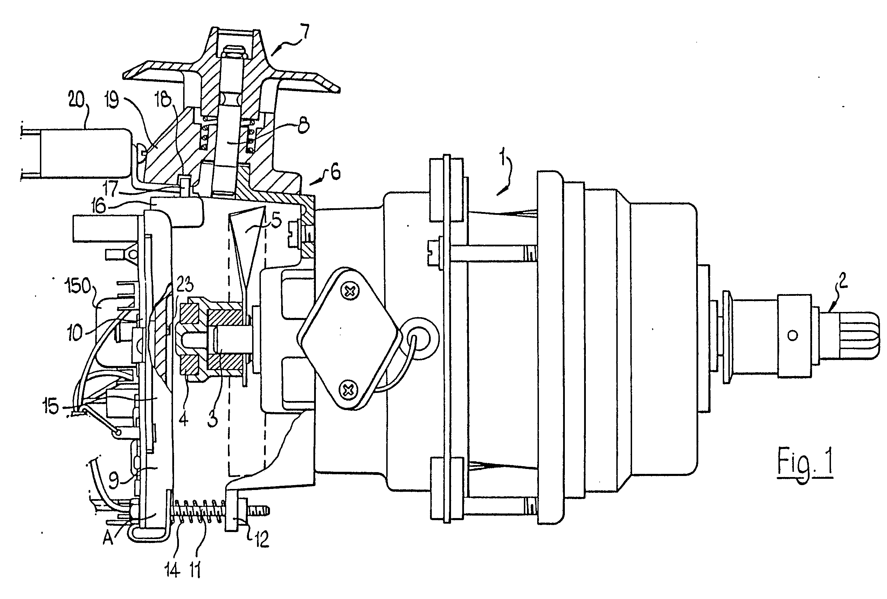

In Figure 1 the drive motor 1 of the mixer has a drive shaft 2 projecting from one end and a stub shaft 3 projecting from the other. Mounted on the end of the stub shaft 3 is at least one magnet 4 whose purpose will be explained below. Also mounted on the stub shaft is a cooling fan 5.

On the left hand end of the motor 1 is a mounting assembly 6 which carries both a speed control knob 7 which is rotatably mounted on the assembly 6 by means of a shaft 8 and also a circuit board assembly 9 which includes a circuit board 10 on which is mounted the speed control circuitry associated with the motor. The assembly 9 is mounted relative to the mounting 6 by means of two horizontally spaced apart bolts 11 which extend through apertures in a down-turned flange 12 on the mounting 6 and in the lower part of the circuit board assembly 9. The apertures in the circuit board assembly are somewhat larger in diameter that the bolt 11 so that the circuit board assembly 9 is loosely mounted on the bolts, so that the assembly 9 can pivot about an axis at A in Figure 1. Springs 14 acting between the flange 12 and the circuit board assembly 9 urge the lower part of the latter leftwardly in Figure 1.

Mounted on the circuit board 10 is a pick-up coil 150 which, during operation of the motor, has EMF pulses induced in it of an amplitude dependent both upon the speed of rotation of the motor and the separation between the circuit board assembly and the rotational path of the magnets 4. This provides a means of control of the set speed of the motor since, as will be explained below, the speed control circuitry acts to vary the set speed in dependence on the amplitude of the EMF pulses (for a given rotational speed) induced in the coil 150.

As mentioned above, the slack mounting of the circuit board assembly 9 on the bolts 11 allows it to pivot about an axis perpendicular to the plane of Figure 1, this axis being located approximately at A in Figure 1 so that the coil 150 is movable towards and away from the rotational path of the magnets 4. As the circuit board assembly is pivoted anticlockwise in the Figure, the flux linking the coil from the magnets 4 decreases so that the amplitude of the EMF pulses induced in the coil 150 for a given rotational speed decreases.

The circuit board assembly 9 also includes a plastics holder 15 on which the circuit board is mounted and this holder 15 is provided with a plate 16 projecting towards the left hand end of the motor and carrying an upwardly directed pin 17. This pin 17 engages in a groove 18 on the underside of the control knob. The radial distance of this groove from the axis of the shaft 8 varies dependent upon the rotational position of the knob 7 so that by turning the knob 7 the pivotal position of the circuit board assembly and thus the distance between the pick-up coil 150 and the path of the magnets 4 is manually adjustable.

The control knob 7 also has at one part of its periphery a lobe 19 which operates the main on/off switch 20 of the mixer so that the control knob 7 has to be turned somewhat from its zero position before the circuitry will energise.

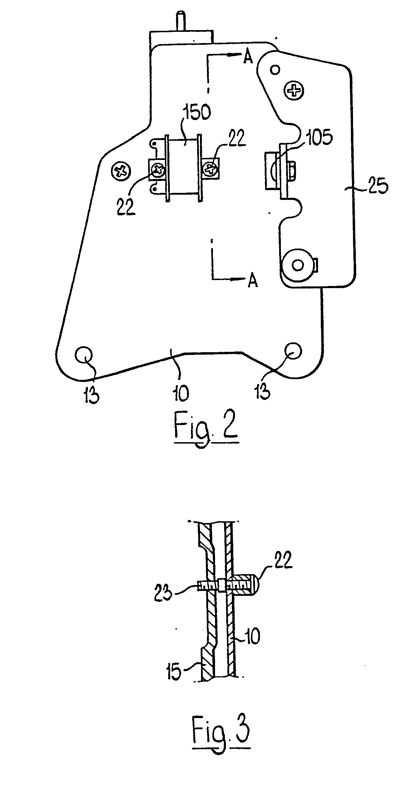

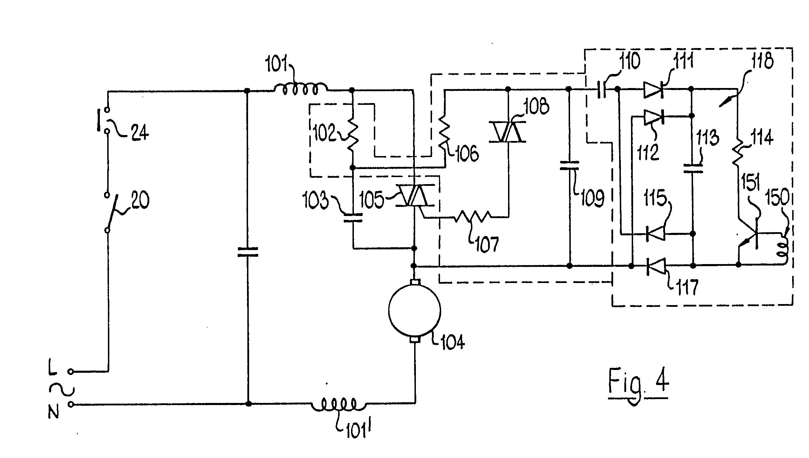

Figure 2 shows the circuit board 10 with the coil 150 mounted upon it and shown at 13 are heads of the two horizontally spaced apart bolts 11, shown in Figure 1. As can be seen from Figure 3, the mounting bolts 22 extend through the circuit board 10 and the holder 15 and each have a stud 23 projecting towards the magnets 4. These bolts 22 are made of a magnetically permeable material and together with the magnets 4 and a core (not shown) of the coil form a magnetic circuit passing through the coil.

Figure 4 shows the motor 1 and associated speed control circuitry. The motor 1 is an AC series wound motor comprising rotatable armature 104 and two field coils 101 and 101'. Corresponding terminals of the field coils 101 and 101' are connected across an alternating current mains supply via the main on/off switch 20 and a cut-out 24 while the other terminals of the field coils are interconnected by the armature 104 of the electric motor and a triac 105 which are connected in series with one another. Capacitor 103 and resistor 102 serve as a protection network for the triac. The fact that the triac 105 and motor armature are located "between" the field coils 101 and 101' in the circuit helps to prevent interference produced by the triac from being injected back into the mains supply. Figure 2 shows a heat sink 25 for triac 105 mounted on the circuit board 10.

A phase control gating circuit for the triac 105 comprises series connected resistor 106 and capacitor 109 and a resistor 107 and diac 108 which are connected in series with one another between the gate of triac 105 and the junction of resistor 106 and capacitor 109.

During each half cycle a gating pulse of appropriate polarity is applied via diac 108 to the gate of triac 105, the time delay between each zero-crossover of the mains supply occurring and the next gating pulse being applied to triac 105 being determined by a time constant associated with the phase control circuit. As the delay between each zero-crossover and the next gating pulse increases, the amount of power supplied by the triac 105 to the motor armature 104 and the armature torque both decrease.

The operation of the phase control is modified by the presence of the circuitry to the right of capacitor 109. This circuitry essentially comprises a capacitor 110 in series with a bridge circuit generally designated 118. The bridge 118 comprises four diodes 111, 112, 115 and 117 arranged in a full-wave configuration with one pair of opposite corners of the bridge, namely the DC nodes, being interconnected both by capacitor 113 and a resistor 114 and in the collector/emitter circuit of a transistor 151. The remaining corners, i.e. the AC nodes of the bridge, are connected to the right-hand plate of capacitor 110 and the lower plate of capacitor 109.

During each mains half cycle, before the diac 108 triggers, a charging current flows via resistor 106 to charge capacitors 109 and 110. The rate of change of the potential across each of these capacitors 109 and 110 will, of course, depend on the respective charging currents supplied to them and because the total current available for charging these capacitors is limited by resistor 106, if more current is drawn by capacitor 110, the rate of increase of the voltage across capacitor 109 with respect to time will be lower so that the time delay between each mains zero-crossover and triggering of diac 108 (and hence gating of triac 105), will be longer. The current which will flow to charge the capacitor 110 will depend on the voltage at the right hand plate of capacitor 110 and this voltage is determined by that across capacitor 113.

Capacitor 113 can be discharged via resistor 114 by the transistor 151 across whose base and emitter is connected the pick-up coil 150. Obviously, the faster the motor armature 104 rotates, the greater will be the amplitudes of the induced EMF pulses delivered by the pick-up coil 150 to the base of transistor 151, i.e. the amplitude is dependent, *inter alia*, on the speed of rotation of the motor. Each pulse from pick-up coil 150 causes transistor 151 to conduct thereby providing a discharge path for capacitor 113 via resistor 114, so that transistor 151's collector current increases with increasing armature speed.

Assuming capacitor 113 initially to be discharged at the start of a mains half-cycle, it will start to charge as the mains wave form increases in magnitude via capacitor 110 and those diodes of the bridge, for example diodes 111 and 117, which are forward biased during this mains half-cycle. Capacitor 109 thus charges more slowly than it otherwise would. This leads to a delay in the diac 108 gating on triac 105. As capacitor 113 is contained within the diode bridge and the only route by which it can discharge is via resistor 114 and the collector to emitter circuit of transistor 151, the effective resistance of the discharge path is dependent on the amplitude of the pulses being supplied by pickup coil 150 and hence the rotational speed of the armature 104. The rotational speed of the armature 104 reaches equilibrium when the charging and discharging currents of capacitor 113 are balanced. Thus, if the armature rotational speed is greater than its equilibrium value the voltage across capacitor 113 will tend to drop and in consequence it will tend to recharge via capacitor 110 thus diverting current from capacitor 109. As a result, gating on of triac 105 during each mains half-cycle is delayed so that the armature torque and hence armature speed drop back towards the equilibrium value and this process continues until equilibrium is again reached. A corresponding process occurs when the motor is running below the set speed.

It will be appreciated that since the amplitude of the pulses induced in the pick-up coil 150 is dependent, *inter alia*, on the distance of the coil from the magnets 4, by varying this distance, the set speed of the motor can be adjusted.

Numerous modifications of the above described apparatus are, of course, possible. For example, the magnets 4 could be replaced by pieces of magnetically permeable material and the magnet placed elsewhere in the magnetic circuit associated with the pick-up.

Naturally the invention can be used in a wide variety of applications where motor speed control is required.

**Claims**

1. A speed control system for an electric motor (1) including components which respond to rotation of the electric motor (1) to generate a control signal usable to control the speed of the electric motor (1), the speed control system also including a circuit board (10) with a pickup coil (150) mounted thereon and at least one magnet (4) connected to said motor (1) and driven for rotation to produce, in the coil (150), an output signal having a magnitude dependent, *inter alia*, on the motor speed, characterised in that the circuit board (10), together with the pick-up coil (150) and a control circuit also mounted thereon, is arranged to be pivotally movable relative to the rotational path of said at least one magnet (4), the control circuit being responsive to the output signal of the coil (15) and including a capacitor (113) for generating said control signal to control the speed of said motor (1), charging means (111, 112, 115, 117) connectable to a current source for charging said capacitor (113), and discharge means (151, 114) responsive to said output signal of the coil (150) for discharging the capacitor (113) at a rate dependent upon the magnitude of said output signal, said magnitude being dependent upon the speed of rotation of the motor (1), and thus of said at least one magnet (4), and the relative distance between the circuit board (10) and the rotational path of said at least one magnet (4), the combination further including manually-adjustable means comprising a user-operable mechanical control element (7) for varying the spacing of the circuit board (10) relative to the rotational path of said at least one magnet (4), thereby to control the speed of the motor (1) by varying the pivotal state of the circuit board (10), said control signal being used to vary the power supply to the motor to control the speed thereof, so that the motor speed is dependent on the net discharge rate of said capacitor (113).

2. A system according to Claim 1 wherein the motor (1) comprises a stub shaft (3) on which said at least one magnet (4) is mounted.

3. A system according to Claim 2 wherein the circuit board (10) is disposed facing an end face of said stub shaft (3).

4. A system according to any one of claims 1 to 3 further comprising an on/off switch (20) associated with the motor (1) and wherein the control element (7) has a lobe (19) arranged to operate said switch (20).

5. A food mixer incorporating a combination of an electric motor (1) and a speed control system therefor, according to any one of the

4

preceding claims.

**Revendications**

1. Un système de commande de vitesse pour un moteur électrique (1) qui comporte des éléments qui fonctionnent en réponse à la rotation du moteur électrique (1) pour engendrer un signal de commande utilisable pour commander la vitesse du moteur électrique (1), le système de commande de vitesse comportant également une plaquette de circuit (10) sur laquelle est montée une bobine de détection (150) et au moins un aimant (4) accouplé au moteur (1) et entraîné en rotation pour produire dans la bobine (150) un signal de sortie dont la grandeur dépend, entre autres, de la vitesse du moteur, caractérisé en ce que la plaquette de circuit (10), en combinaison avec la bobine de détection (150) et un circuit de commande également monté sur elle, est agencée de façon à pouvoir se déplacer en pivotement par rapport au trajet de rotation dudit aimant (4) dont il est prévu au moins un, le circuit de commande fonctionnant en réponse au signal de sortie de la bobine (150) et comportant un condensateur (113) pour engendrer ledit signal de commande qui sert à commander la vitesse dudit moteur (1), des moyens de charge (111, 112, 115, 117) susceptibles d'être connectés à une source de courant pour charger ledit condensateur (113) et des moyens de décharge (151, 114) fonctionnant en réponse audit signal de sortie de la bobine (150) pour décharger le condensateur (113) à un taux dépendant de la grandeur dudit signal de sortie, ladite grandeur étant fonction de la vitesse de rotation du moteur (1) et, ainsi, de celle dudit aimant (4) dont il est prévu au moins un et de la distance relative entre la plaquette de circuit et le trajet de rotation dudit aimant (4) dont il est prévu au moins un, la combinaison comprenant, en outre, des moyens réglables manuellement comprenant un élément de commande mécanique (7) actionné par l'opérateur pour modifier l'espacement de la plaquette de circuit (10) par rapport au trajet de rotation dudit aimant (4) dont il est prévu au moins un, de manière à commander la vitesse du moteur (1) en faisant varier l'état de pivotement de la plaquette de circuit (10), ledit signal de commande étant utilisé pour faire varier la puissance fournie au moteur afin d'en commander la vitesse de sorte que la vitesse du moteur est fonction du taux de décharge net dudit condensateur (113).

2. Un système selon la revendication 1, dans lequel le moteur (1) comporte un bout d'arbre (3) sur lequel ledit aimant (4) dont il est prévu au moins un est monté.

3. Un système selon la revendication 2, dans lequel la plaquette de circuit (10) est disposée face à une face d'extrémité dudit bout d'arbre (3).

4. Un système selon l'une quelconque des revendications 1 à 3 comprenant, en outre, un interrupteur de marche/arrêt (20) associé au moteur (1) et dans lequel l'élément de commande (7) comporte un bossage (19) agencé pour actionner ledit interrupteur (30).

5. Un mélangeur d'aliments incorporant une combinaison d'un moteur électrique (1) et d'un système de commande de vitesse pour ce moteur selon l'une quelconque des revendications précédentes.

**Patentansprüche**

1. Geschwindigkeits-Regelsystem für einen Elektromotor (1) mit Komponenten, die auf die Drehung des Elektromotors (1) ansprechen, um ein Regelsignal zu erzeugen, das zur Regelung der Geschwindigkeit des Elektromotors (1) verwendbar ist, wobei das Geschwindigkeits-Regelsystem ferner eine Leiterplatte (10) mit einer darauf angebrachten Prüfspule (150) und mindestens einen mit dem Elektromotor (1) verbundenen, zur Drehung angetriebenen Magneten (4) enthält, um in der Spule (150) ein Ausgangssignal zu erzeugen, dessen Größe unter anderem von der Motorgeschwindigkeit abhängt, dadurch gekennzeichnet, daß die Leiterplatte (10) zusammen mit der Prüfspule (150) und einer ebenfalls darauf angebrachten Regelschaltung so angeordnet ist, daß sie relativ zu dem Drehweg des wenigstens einen Magneten (4) drehbar beweglich ist, daß die Regelschaltung auf das Ausgangssignal der Spule (150) anspricht und einen Kondensator (113) zur Erzeugung des Regelsignals zur Regelung der Geschwindigkeit des Motors (1) enthält, daß an eine Stromquelle zur Ladung des kondensators (113) anschließbare Lademittel (111, 112, 115, 117) vorgesehen sind sowie Entlademittel (151, 114), die auf das Ausgangssignal der Spule (150) ansprechen, um den Kondensator (113) mit einer Rate zu entladen, die von der Größe des Ausgangssignals abhängt, wobei die genannte Größe von der Drehgeschwindigkeit des Motors (1) und damit des wenigstens einen Magneten und von der relativen Entfernung zwischen der Leiterplatte (10) und dem Drehweg des wenigstens einen Magneten (4) abhängt, daß ferner von Hand einstellbare Mittel vorgesehen sind, die ein vom Benutzer betätigbares mechanisches Steuerelement (7) zur Änderung des Abstandes der Leiterplatte (10) relativ zum Drehweg des wenigstens einen Magneten (4) enthalten, um damit die Geschwindigkeit des Motors (1) durch Änderung des Drehzustandes der Leiterplatte zu regeln, und daß das Regelsignal dazu dient, die Stromversorgung zum Motor für die Regelung seiner Geschwindigkeit zu verändern, so daß die Motorgeschwindigkeit von der Netto-Entladungsrate des genannten Kondensators (113) abhängt.

2. System nach Anspruch 1, wobei der Motor (1) eine Stummelwelle (3) enthält, auf der der wenigstens eine Magnet (4) angebracht ist.

3. System nach Anspruch 2, wobei die Leiterplatte (10) so angeordnet ist, daß sie einer Stirnfläche der Stummelwelle (3) zugekehrt ist.

4. System nach einem der Ansprüche 1 bis 3, das einen Ein/Ausschalter (20) enthält, der dem Motor (1) zugeordnet ist, und bei dem das Steuerelement (7) einen Vorsprung (19) besitzt, um den Schalter (20) zu betätigen.

5. Nahrungsmittel-Mixer, der eine Kombination eines Elektromotors (1) und eines Geschwindigkeits-Regelsystems dafür nach einem der vorhergehenden Ansprüche enthält.

Fig.1

Fig. 2

Fig. 3

Fig. 4